(19) Europäisches Patentamt

European Patent Office

Office européen des brevets

(11) **EP 1 168 679 A1**

(12) **EUROPEAN PATENT APPLICATION**

(43) Date of publication:
**02.01.2002 Bulletin 2002/01**

(51) Int Cl.$^7$: **H04B 10/135**, G02B 27/28

(21) Application number: **01305142.0**

(22) Date of filing: **13.06.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **21.06.2000 EP 00305236**
**27.06.2000 US 214501 P**

(71) Applicant: **PIRELLI CAVI E SISTEMI S.p.A.**
**20126 Milano (IT)**

(72) Inventors:
• **Martinelli, Mario**
**20097 San Donato Milanese (MI) (IT)**
• **Martelli, Paolo**
**20147 Milano (IT)**
• **Barberis, Angelo**
**20040 Cambiago (MI) (IT)**

(74) Representative: **Haines, Miles John et al**
**D. Young & Co. 21 New Fetter Lane**
**London EC4A 1DA (GB)**

(54) **Passive polarisation stabiliser**

(57)    In an interferometer configuration, a retarder in the form of a half-wave plate (125) and a phase shifter in the form of a glass plate (120) are arranged in one arm (114). The phase shifter provides an optical path difference between the interferometer arms which needs to be greater than the coherence length of the input light to be polarisation stabilised. A polariser in the form of a linear polariser (118) aligned at 45° to the half-wave plate is arranged across both interferometer arms (114 & 116). Polarisation stabilisation action is achieved by the retarder in combination with the polariser. More specifically, for at least one input polarisation state, the polarisation states in the two interferometer arms are rendered orthogonal by the retarder, the polariser being aligned to allow only one of the two orthogonal states to be transmitted, the other being absorbed. The device is expected to find application for WDM networks based on broadband sources, such as superluminescent diodes. The device is also expected to be useful for providing a front-end polarisation stabilisation of the signal supplied to optical elements that are sensitive to the polarisation state of their input. Examples of such elements are semiconductor optical amplifiers, integrated optical splitters and electro-optical switches.

Fig. 2

EP 1 168 679 A1

**Description**

## BACKGROUND ART

The invention relates to a passive polarisation stabiliser and applications thereof in optical systems and sub-systems.

Polarisation stabilisation is required in many applications. For example, low-loss telecommunications optical fibre is not polarisation preserving. Consequently, light emerging from such fibre will have an undefined polarisation state. On the other hand, many devices which may be arranged to receive light from an optical fibre are sensitive to the polarisation state of the input light. Examples of such polarisation sensitive devices are semiconductor optical amplifiers (SOA's), interferometric fibre sensors, electro-optical modulators, wavelength division multiplexing couplers and electro-optical switches based on electro-optic crystals or liquid crystals. The use of polarisation preserving fibre can solve the problem, but is often unattractive since polarisation preserving fibre is relatively costly and has higher loss, and may not even be possible for many telecommunications applications where devices must be compatible with existing installed fibre.

To provide polarisation stabilisation, many types of active polarisation stabilisers are available. By active it is meant that an element of the device is controlled according to a feed-back (or feed-forward) signal derived from a signal indicative of the polarisation state. Active polarisation stabilisers are known that control a birefringent element or a Faraday rotator based on a feed-back signal. However, for many telecommunications networks, active devices are to be avoided if possible in view of reliability issues and the need to supply power to the device.

Passive polarisation stabilisers would thus, in principal, be attractive devices for many applications. For example, a passive polarisation stabiliser could be used as a component in a passive optical network. Generally speaking, a passive device can be expected to be more reliable and less complex and costly than a comparable active device.

At the present time, the inventors know of no commercially available passive polarisation stabiliser.

A polarisation stabiliser is proposed in JP-A-8248358 (reference [1]). However, it is not understood how this proposed device could possibly function in practice, because its design does not take account of the fact that the phase difference between the two beams at the end of the arms (optical transmission lines 3-1, 3-2) is dependent on the input polarisation state. The interference of these beams on recombination (at optical muliplexer 2) would produce an output power that is dependent on the input polarisation state. The polarisation stabilisation function would therefore not be achieved.

## SUMMARY OF THE INVENTION

According to a first aspect of the invention there is provided a polarisation stabilising device comprising:

an input light path for receiving a light signal having an undefined polarisation state;
a divider arranged in the input light path to split the light signal into first and second components;
a first interferometric arm arranged to receive from the divider the first component of the light signal;
a second interferometric arm arranged to receive from the divider the second component of the light signal;
an output path for outputting the light signal from the first and second interferometric arms;
at least one polariser arranged either in the first and second interferometric arms, or in the output path, to define an output polarisation state for the light signal; and
at least one retarder arranged in at least one of the first and second interferometric arms to generate first and second polarisation states in the first and second interferometric arms, respectively, that are orthogonal to each other for at least one polarisation state of the input light signal so that the first polarisation state is transmitted by the at least one polariser and the second polarisation state is absorbed by the at least one polariser, thereby to output the light signal in the output polarisation state defined by the at least one polariser.

The polarisation stabilising device is purely passive and is based on interferometric principals. There is no active feed-back mechanism of any kind. The polarisation stabilising device may be attractive for use in an optical network, especially a passive optical network.

With this arrangement, at a particular input polarisation state (or its orthogonal state), the two polarisation states at the ends of the interferometric arms are orthogonal to each other, with one being transmitted and the other being eliminated.

Splitting and recombination of the light at the beginning and end of the two interferometric arms is preferably carried out in a manner that is insensitive to the alignment of the input polarisation state, and the polarisation states in the two arms respectively. Recombination is however sensitive to the relative polarisation states in the two interferometric arms, as defined above.

A phase shifter may be provided in one of the first and second interferometric arms to ensure that there is an optical path difference between the first and second interferometric arms that is higher than a coherence length specified for the light signal.

A combiner may be arranged to combine the first and second components of the light signal into the output path.

The at least one polariser may comprise a polarising element placed in the output path, a polarising element placed in both the interferometer arms, or two polarising elements, one placed in each interferometer arm.

The at least one retarder may comprises a retarding element arranged in either of the interferometer arms, or two retarding elements, one in each arm.

According to a second aspect of the invention there is provided an optical component, comprising: an optical device having an input for receiving an input light signal, the optical device being sensitive to the polarisation state of its input signal; and a polarisation stabilising device according to the first aspect of the invention arranged to stabilise the polarisation state of the input signal prior to supply to the input of the optical device. The optical device may be a semiconductor optical amplifier (SOA), electro-optic switch or optical splitter.

According to a third aspect of the invention there is provided a method of polarisation stabilisation, comprising: inputting a light signal into an interferometer arrangement comprising first and second arms having an optical path difference therebetween greater than the coherence length of the light signal; and applying a polarisation so that one of the orthogonal polarisation states is absorbed while the other is transmitted. The polarisation may be applied in both the first and second arms, or subsequent to recombination of the light signal after the first and second arms.

The optical path difference between the arms of the interferometer needs to be greater than the coherence length of the light signal being stabilised. Generally for low-coherence light a relatively small optical path difference will suffice, whereas for a high-coherence light, a greater optical path difference will be needed.

For example, a light source having a centre wavelength of 1550 nm and a bandwidth of 2 nm has a coherence length of 1.2 mm. In that case, an optical path difference of 1 cm between the interferometer arms will be satisfactory. The polarisation stabilising device and method can be incorporated into an optical communication system that uses a broadband light source in order to avoid polarisation noise at the receiver. The polarisation stabiliser can conveniently be placed after a transmission link made of standard telecommunications fibre on the input side of a polarisation sensitive element. Polarisation stabilisation is beneficial in this position, since the local birefringence of standard telecommunications fibre is randomly time varying as a result of thermal and mechanical perturbations. Light emitted from the end of a transmission fibre thus generally has a polarisation state showing random temporal fluctuations. Without polarisation stabilisation, the randomly varying polarisation state will cause degradation of receiver performance. More specifically, the random variation of polarisation will result in a random variation in the intensity output from polarisation sensitive optical devices in the receiver.

Broadband light may find application in wavelength division multiplex (WDM) systems in which broadband light from a single source is spectrum-sliced by a WDM demultiplexer. One example of a suitable broadband source is a superluminescent diode (SLD). Another example is amplified spontaneous emission (ASE) from an erbium-doped fibre amplifier (EDFA). In such a system, the broadband light from the broadband source is spectrum-sliced by a WDM demultiplexer. Spectrum-sliced WDM of this kind has potential cost and complexity advantages over a comparable WDM system in which each wavelength channel has a dedicated laser (i.e. narrowband) source.

## BRIEF DESCRIPTION OF THE DRAWINGS

For a better understanding of the invention and to show how the same may be carried into effect reference is now made by way of example to the accompanying drawings in which:

Figure 1 shows a passive interferometric polarisation stabiliser according to a first embodiment of the invention;

Figure 2 shows a free-space implementation of the polarisation stabiliser of Figure 1;

Figure 3 is a graph of the power spectrum of an input light source for input into the polarisation stabiliser of Figure 2;

Figure 4 is a graph of the power spectrum of the light output from the polarisation stabiliser of Figure 2 having received input light power spectrum as shown in Figure 3;

Figure 5 is a graph of the normalised output power from the polarisation stabiliser of Figure 2 as a function of the azimuth of the polarisation state of a linearly polarised input light beam;

Figure 6 is a graph of the normalised output power from the polarisation stabiliser of Figure 2 as a function of phase difference for input light having an arbitrary polarisation state defined by a phase difference of between 0 and 90 between the linear orthogonal states into which any input polarisation state can be decomposed;

Figure 7 shows a passive interferometric polarisation stabiliser according to a second embodiment of the invention;

Figure 8 shows a passive interferometric polarisation stabiliser according to a third embodiment of the invention;

Figure 9A shows a first set of specific examples of the third embodiment;

Figure 9B shows a second set of specific examples of the third embodiment;

Figure 9C shows a third set of specific examples of the third embodiment;

Figure 10 shows a passive interferometric polarisation stabiliser according to a fourth embodiment of the invention;

Figure 11 shows an optical network incorporating a passive polarisation stabiliser according to any of the first to third embodiments of the invention on the input side of an integrated optical splitter;

Figure 12 shows a passive polarisation stabiliser according to any of the first to third embodiments of the invention arranged on the input side of a semiconductor optical amplifier (SOA); and

Figure 13 shows a passive polarisation stabiliser according to any of the first to third embodiments of the invention arranged on the input side of an electro-optical switch.

## DETAILED DESCRIPTION

First Embodiment

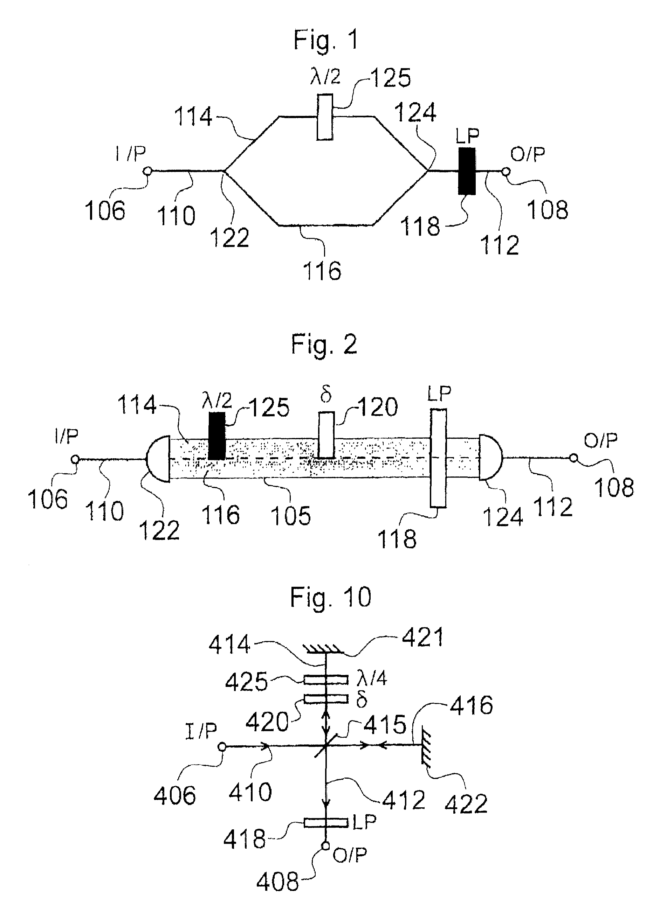

Figure 1 shows a passive polarisation stabiliser according to a first embodiment of the invention. The device has the basic structure of a Mach-Zehnder interferometer. Namely, an input light path 110 leads from an input 106 to a divider or splitter 122 which separates the input path 110 into first and second interferometric arms 114 and 116 respectively. The divider or splitter 122 is polarisation insensitive, by which it is meant that its performance is substantially unaffected by variation of the input polarisation state. The first arm 114 has arranged therein a half-wave plate 125. The two arms of the interferometer then join again at a combiner 124 into an output path 112 which terminates in an output 108. The combiner 124 is polarisation insensitive, by which it is meant that its performance is substantially unaffected by variation of the respective absolute alignments of the polarisation states of the light signals being recombined, although recombination will be affected by the relative alignment of these polarisation states, as is central to operation of the device. Arranged in the output path 112 there is a linear polariser 118. The axis of the linear polariser 118 is oriented at +/-45° relative to the principal axis of the half-wave plate 125.

The device delivers an output from the output 108 that has a fixed polarisation state defined by the alignment of the linear polariser 118. Moreover, the output light has substantially constant power, regardless of the polarisation state of the input light received at the input 106.

The device is all-passive, having no active components, but nevertheless will deliver an output light signal with defined polarisation and constant optical power from an input beam having an arbitrarily time-varying polarisation state.

For polarisation stabilisation to be achieved, it is necessary that the optical path difference between the two interferometer arms 114 and 116 is higher than the coherence length of the light beam. A suitable optical path difference can be provided by inserting some kind of phase-shifting element in one or other of the two interferometer arms. If the envisaged light source is very broadband, then it may not be necessary for any specific phase shifting element to be included. However, in cases where a specific phase shifting element is needed, this may comprise an additional length of optical fibre for a fibre interferometer. Alternatively, for a free-space interferometer, the phase shifter may be a simple glass plate.

The principles of operation of the device of Figure 1 are now described in more detail in which the azimuth of polarisation of the linear polariser 118 is at 45° and the half wave plate 125 at 0°.

An input optical beam with central frequency $\nu_0$ and spectral bandwidth $\Delta\nu$ is now considered. The coherence length of such a beam is $L_c = c/\Delta\nu$, where c is the speed of light. Moreover, the condition of quasi-monochromaticity is assumed. In other words, it is assumed that the spectral bandwidth is much less than the central frequency so that retardation between the principal axes of the waveplate is nearly $\pi$ over the entire spectrum of the light beam. The action of the interferometric device on each monochromatic component of the optical beam is described by the following Jones matrix:

$$J = \frac{1}{2}\begin{bmatrix} 1 & 1 \\ 1 & 1 \end{bmatrix}\left\{ \frac{1}{2}\begin{bmatrix} i & 0 \\ 0 & -i \end{bmatrix} + \frac{1}{2}e^{i\delta}\begin{bmatrix} 1 & 0 \\ 0 & 1 \end{bmatrix}\right\}, \tag{1}$$

where $\delta$ is the phase delay between the two arms of the interferometer. By means of matrix algebra, the expression (1) becomes:

$$J = \frac{1}{4}\begin{bmatrix} e^{i\delta} + i & e^{i\delta} - i \\ e^{i\delta} + i & e^{i\delta} - i \end{bmatrix}. \tag{2}$$

It is then possible to determine the Mueller matrix that represents the device according to the methodology described by Jerrard (reference [2]). Using this methodology, the Jones matrix (2) provides the following expression:

$$M_{ij} = \frac{1}{2}\text{trace}[\sigma_i J \sigma_j J^a],$$

where:

$$\sigma_0 = \begin{bmatrix} 1 & 0 \\ 0 & 1 \end{bmatrix}, \qquad \sigma_1 = \begin{bmatrix} 1 & 0 \\ 0 & -1 \end{bmatrix}, \qquad \sigma_2 = \begin{bmatrix} 0 & 1 \\ 1 & 0 \end{bmatrix}, \qquad \sigma_3 = \begin{bmatrix} 0 & -i \\ i & 0 \end{bmatrix},$$

are the Pauli matrices and J* is the transpose of the complex conjugate of J. Finally, the Mueller matrix of the device is:

$$M = \frac{1}{4}\begin{bmatrix} 1 & \sin\delta & 0 & \cos\delta \\ 0 & 0 & 0 & 0 \\ 1 & \sin\delta & 0 & \cos\delta \\ 0 & 0 & 0 & 0 \end{bmatrix}.$$

The Stokes vector that represents the input optical beam is $[1\ s_1\ s_2\ s_3]$. It then follows that the output Stokes vector is:

$$M \cdot \begin{bmatrix} 1 \\ s_1 \\ s_2 \\ s_3 \end{bmatrix} = \frac{1}{4}\begin{bmatrix} 1 + s_1\sin\delta + s_3\cos\delta \\ 0 \\ 1 + s_1\sin\delta + s_3\cos\delta \\ 0 \end{bmatrix}. \tag{3}$$

The output linear polarisation state is linear with an azimuth of 45° The output optical power depends on the phase delay between the two arms of the interferometer. This phase delay $\delta$ is frequency-dependent according to the following expression:

$$\delta = \frac{2\pi}{c}\nu\Delta L,$$

where $\Delta L$ is the optical path difference between the two arms. The output Stokes vector (3) is also frequency-dependent. Its first element is the power spectral transmission of the interferometric device. The input spectral power density $\rho_{in}$ ($\nu$) and the output spectral power density $\rho_{out}$ ($\nu$) are then given by the following expression:

$$\frac{\rho_{out}(\nu)}{\rho_{in}(\nu)}=\frac{1}{4}[1=+s_1\ \sin\delta(\nu)+s_3\cos\delta(\nu)] \tag{4}$$

To obtain the output optical power for broadband light, the power spectral transmission function (4) is integrated weighted by the input power spectral density $\rho_{in}(\nu)$:

$$P_{out}=\frac{1}{4}\int[1+s_1\sin\delta(\nu)+s_3\ \cos\delta(\nu)]\rho_{in}(\nu)d\nu$$

The functions $\sin\delta(\nu)$ and $\cos\delta(\nu)$ have a periodicity $c/\Delta L$ (in frequency) and provide a certain number of periods $N_p$ in a given bandwidth $\Delta\nu$, namely:

$$N_p=\frac{\Delta\nu\Delta L}{c}=\frac{\Delta L}{L_c}$$

If the optical path difference between the two arms $\Delta L$ is much higher than the beam coherence length $L_c$ then the integrals of the functions $\sin\delta(\nu)$ and $\cos\delta(\nu)$ weighted by the input power spectral density $\rho_{in}$ ($\nu$) approach zero, since the negative and positive contributions to the integrals cancel out. It therefore results that:

$$P_{out}=\frac{1}{4}P_{in}$$

for

$$\Delta L \gg L_c.$$

It is noted that the output polarisation state is linear with azimuth of $45°$, by virtue of the action of the polariser.

In summary, the above analysis shows that the optical beam at the output of the device has a fixed linear polarisation state and, moreover, that the transmitted power is independent of the input polarisation state, provided that the condition $\Delta L \gg L_c$ is satisfied.

<u>Example of First Embodiment</u>

Figure 2 shows a free-space implementation of the device shown in Figure 1. The interferometric device comprises an input-side optical fibre 110 for receiving an input signal at an input 106. At the output, the device has an output optical fibre 112 terminating in an output 108. The input optical fibre 110 terminates at its other end in a collimating lens 122 which may, for example, be a graded index (GRIN) spherical lens cemented to the end of the optical fibre. Similarly, the output optical fibre 112 terminates at its other end in a further collimating lens 124. The two collimating lenses 122 and 124 define a collimated beam path 105 linking the input and output sides of the device. A half-wave plate 125 is arranged across one-half of the beam path 105 together with a phase shifter 120. The phase shifter 120 is a simple glass plate. The glass plate has a refractive index of 1.5 and a thickness of 1 mm in the specific implementation. The positioning of the half-wave plate 125 and phase shifter 120 thus define one arm of an interferometer by intercepting only a part, specifically one-half, of the beam 105. The sub-division of the collimated beam path 105 into the two interferometric arms is shown schematically in Figure 2 by the dashed line. A linear polariser 118 is arranged downstream of the half-wave plate across the full beam path 105, i.e. across both interferometer arms.

The positioning of the polariser 118 in each of the interferometric arms is functionally the same as arranging a polariser after the interferometric recombination of the two arms, as illustrated in Figure 1. The positioning of the polariser in Figure 2 was chosen for its simplicity of implementation.

The free-space implementation of the interferometer arms has the advantage of avoiding any birefringence effects, which would degrade the device performance.

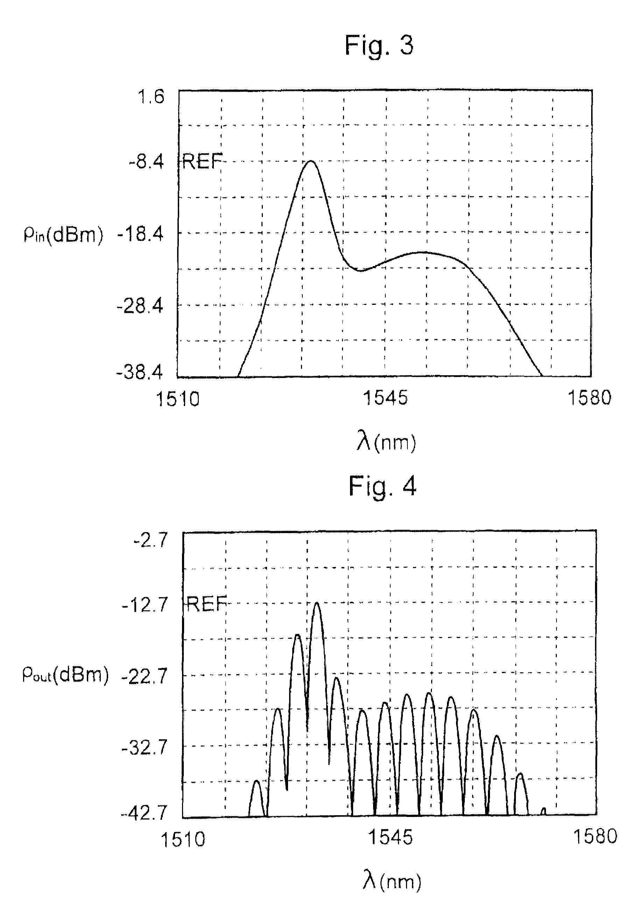

The performance of the polarisation stabiliser of Figure 2 is now discussed with reference to Figures 3 to 6.

The performance was tested using the amplified spontaneous emission (ASE) of an erbium-doped fibre amplifier (EDFA) as the light source.

Figure 3 shows the spectral power density of the ASE EDFA light source.

Figure 4 shows the corresponding power spectral density at the output of the device. The results are for input light having a linear polarisation state with an azimuth of zero degrees. The experimental results are in good agreement with the theory that predicts the following output spectral power density (see equation (4) with $s_1 = 0$ and $s_3 = 0$):

$$\rho_{out}(\nu) = \frac{1}{4}\left[1 + \sin\left(2\pi\frac{\Delta L}{c}\nu\right)\right]\rho_{in}(\nu)$$

The output power spectral density $\rho_{out}(\nu)$ is thus equal to a modulation of the input power spectral density $\rho_{in}(\nu)$ with period $c/\Delta L$. This period is given in terms of frequency. The corresponding period in wavelength is $\lambda^2/\Delta L$. The wavelength difference between adjacent peaks in Figure 4 thus gives a value for the optical path difference $\Delta L$ which is equal to 0.54 mm. This optical path difference is defined by the phase shifter 120. Furthermore, the presence of several peaks in the output power spectral density shows that $\Delta L$ is higher than the beam coherence length $L_c$, as is required.

To verify the effectiveness of the device for polarisation stabilisation, the azimuth of the linear polarisation state of the input beam was rotated through 180° while maintaining the same input intensity.

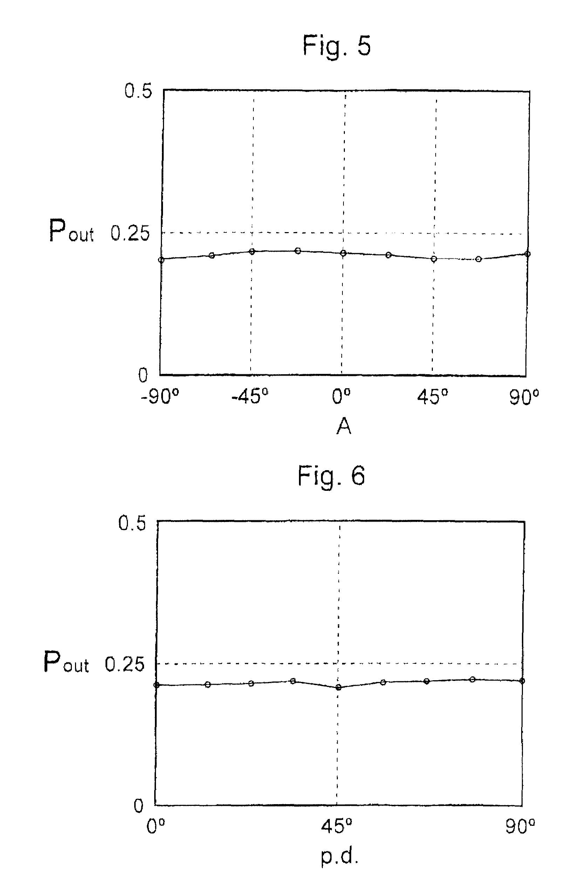

Figure 5 shows the results of this experiment. Figure 5 plots the normalised output power $P_{out}$ integrated over frequency as a function of the azimuth of the linear input polarisation state over the angular range -90° to +90°. As can be seen from the results, the output power is substantially independent of the input state polarisation, with only a small variation occurring.

Figure 6 shows the results of a further experiment performed to verify the performance of the device. In this experiment, two orthogonal linear input polarisation states of azimuth 0° and 90° respectively were superposed with a phase difference varied between 0° (input linear state at 45°) and 90° (input circular state). Figure 6 plots these results in terms of the output power, $P_{out}$, against the phase difference, p.d.. As can be seen from the results, the output power is substantially constant regardless of the phase difference.

The results of Figures 5 and 6 thus demonstrate the high degree of independence of the device output to the input polarisation state. An input light signal of arbitrarily varying polarisation is thus translated into an output light signal of defined stable polarisation having an intensity directly proportional to the intensity of the input light signal.

Consequently, if the input light signal has constant power, the output light signal will also have constant power. Equally, if the input light source is amplitude modulated (but of unstable or varying polarisation), the amplitude modulation will be faithfully reproduced in the polarisation stabilised output. Still further, the losses of the device are relatively small, so that the output power is close to one quarter of the input power as predicted by equation (4). The experimental results of Figures 5 and 6 thus show that efficiency of the realised device is around 80-90% of the theoretical maximum.

Second Embodiment

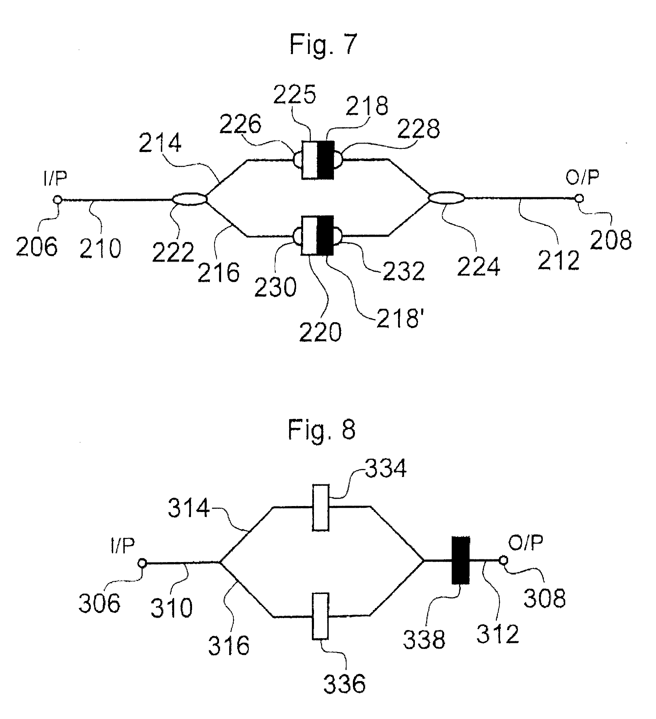

Figure 7 shows a passive polarisation stabiliser according to a second embodiment of the invention. The second embodiment is primarily an optical fibre device. An input optical fibre 210 leads from an input 206 to a 50/50 fibre coupler 222. On its output side, the fibre coupler 222 has first and second optical fibre sections defining parts of first and second interferometric arms 214 and 216 respectively. The fibre section of the first arm 214 leads to a collimating lens 226. Similarly, the second arm 216 leads to a further collimating lens 230. Cemented to the collimating lens 226 there is a half wave plate 225 and then a linear polariser 218. The linear polariser 218 is cemented in turn to a further collimating lens 228 which serves to de-collimate light received through the components 225 and 218 into a further section of optical fibre which also forms part of the first interferometric arm 214. Referring to the second interferometric arm 216, the collimating lens 230 is cemented to a phase shifter 220 which, in turn, is cemented to a further linear polariser 218'. The linear polariser 218' is cemented to a collimating lens 232 which serves to de-collimate light that has traversed the components 220 and 218' into a section of optical fibre which forms part of the second interferometric arm 216.

The half wave plate 225 is aligned at an azimuth of the slow axis of 0° and the linear polariser 218 at an angle of 45°. The linear polariser 218' in the second interferometric arm is similarly aligned at 45°. The two arms 214 and 216 then recombine in a further 50/50 fibre coupler 224 and the light is then guided to an output 208 through a further optical fibre section 212.

The device of Figure 7 is thus broadly functionally equivalent to that shown in Figure 2. One difference of note is that the phase shifter 220 in Figure 7 is, for convenience, placed in the second arm 216 rather than the first arm 214.

In Figure 2, an analogous arrangement would be achieved if the phase shifter 120 was moved to the other half of the free-space collimated beam. Similar to the device of Figure 2, the device of Figure 7 has the linear polarisation performed in both arms of the interferometer, rather than in the output path, as in the configuration shown in Figure 1. However, by contrast to the device of Figure 2, two separate linear polariser elements are used in Figure 7, one in each arm, each linear polariser having the same alignment.

It will thus be understood from the description of the devices of Figures 1, 2 and 7 that there is considerable design freedom on the precise arrangement of the components. It is necessary that the polarising element be placed subsequent to the waveplate component. However, otherwise the placement of the polarising element or elements can be selected freely. Similarly, the phase shifting element may be provided in either interferometer arm, or may be dispensed with if the coherence length of the input light does not require an enhancement of the optical path difference between the interferometer arms. Moreover, it will be understood that different embodiments will adopt optical fibre or free space arrangements to varying degrees. Similarly, the device could in principle be implemented in planar waveguide technology, or any other technology in which interferometric devices can be fabricated.

Third Embodiment

Figure 8 shows a passive interferometric polarisation stabiliser according to a third embodiment of the invention. The arrangement shown in Figure 8 is in fact a generalisation of the Mach-Zehnder interferometric configuration needed to provide passive polarisation stabilisation according to the principles of the invention. In fact, as will be understood from the following, the devices of Figure 1, Figure 2 and Figure 7 are merely specific examples of an entire class of possible interferometric configurations generically defined by the Figure 8 arrangement.

The device of Figure 8 has a Mach-Zehnder configuration with first and second interferometric arms 314 and 316 respectively opening out from an input path 310 leading from an input 306 and closing down into an output path 312 which terminates in an output 308. In the first interferometric arm 314 there is placed an elliptical retarder 334. A further elliptical retarder 336 is placed in the second interferometric arm 316. In the output path 312 there is placed an elliptical polariser 338.

An elliptical retarder is an optical element which has two orthogonal elliptical polarisation eigenstates and which introduces a phase retardation between them. An elliptical polariser is an optical element which transmits a particular elliptical polarisation state without intensity loss and absorbs its orthogonal elliptical polarisation state. Any desired degree of elliptical polarisation can be realised with a linear polariser placed between two quarter waveplates with orthogonal fast axes.

The fundamental condition to be satisfied by any embodiment of the present invention (whether Mach-Zehnder based or otherwise) is that, in order to obtain polarisation stabilisation, the polarisation states in the two interferometer arms have to be orthogonal subsequent to the retardation action which may be performed either in one or both of the interferometer arms. Choice of a suitable polariser then allows one of the two orthogonal states to be absorbed while the other is transmitted, thus stabilising the output polarisation state independent of the input polarisation state.

By means of a Poincaré sphere representation (see reference [2]), many specific examples of configurations of the third embodiment can be envisaged, as now discussed. There is a one-to-one correspondence between the points on the Poincaré sphere and the polarisation states. The linear states correspond to the equator and the circular states correspond to the two poles. Two orthogonal states correspond to two diametrically opposed points. The action of an elliptical retarder is represented on the Poincaré sphere by a rotation around the axis joining the two orthogonal eigenstates of the retarder. The angle of rotation is equal to the phase difference between the two eigenstates.

For generating some specific examples, the following discussion is restricted to the use of three different elliptical retarders, all corresponding to rotation of 180° around three orthogonal axes passing through the centre of the Poincaré sphere. These three examples are (i) a half-wave plate with slow axis at 0°, (ii) a half-wave plate with slow axis at 45°, and (iii) a rotator of 90°. One of these elliptical retarders is considered to be present on the first interferometric arm, while no retarder is provided in the other arm. In other words, the further elliptical retarder 336 is omitted.

Example 1

In Example 1, the elliptical retarder 334 takes the form of a half-wave plate ($\lambda$/2) with slow axis at 0° (in fact this is the same as in Figure 1, Figure 2 and Figure 7). A half-wave plate with slow axis at 0° transforms into the orthogonal state any polarisation state belonging to the great circle that passes through a circular state and the linear state at 45°, i.e. any elliptical state with a semi-axis at 45°. In order to obtain polarisation stabilisation, the elliptical polariser thus has to project the polarisation state into an elliptical state with semi-axis at 45°. Specific examples of elliptical polarisers which fulfil this function are a linear polariser (LP) aligned at +45° or -45° (as in Figure 1, Figure 2 and Figure 7) or a circular polariser (CP).

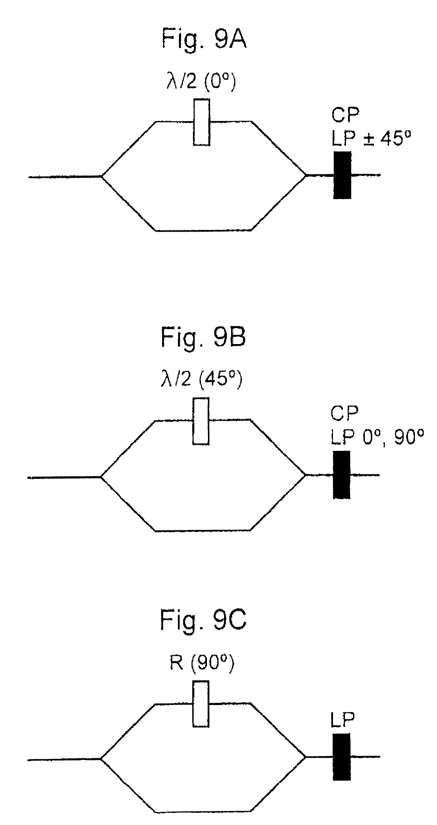

Figure 9A shows each of these specific examples.

Example 2

If the elliptical retarder is a half-wave plate ($\lambda$/2) with slow axis at 45° then this will transform into the orthogonal state any polarisation state belonging to the great circle that passes through a circular state and the linear state at 0°, i.e. any elliptical state with a semi-axis at 0°. In order to obtain polarisation stabilisation, the elliptical polariser will thus need to project the polarisation state into an elliptical state with semi-axis at 0°. Specific examples of polarisers which will perform this function are a linear polariser (LP) aligned at 0° or 90° or a circular polariser (CP).

Figure 9B shows each of these specific examples.

Example 3

If a rotator (R) of 90° is used as the elliptical retarder this will transform into the orthogonal state any polarisation state belonging to the equator, i.e. any linear state. In order to obtain polarisation stabilisation, the polariser will thus need to project the polarisation state into a linear state. Consequently, a linear polariser with any alignment will work in this case.

Figure 9C shows these examples.

Fourth Embodiment

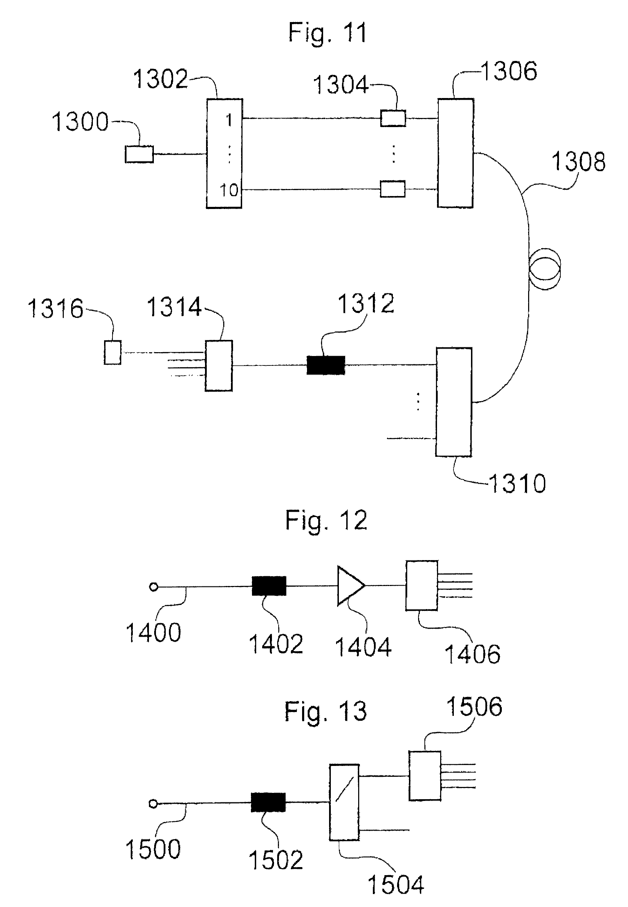

Figure 10 shows a passive interferometric polarisation stabiliser according to a fourth embodiment of the invention. As an alternative to the previously discussed embodiments, the device of the fourth embodiment is based on a Michelson interferometer configuration. An input 406 leads to an input path 410 which terminates at a beam splitter 415. One half of the input light signal is transmitted by the beam splitter, the other half being reflected, thus providing the light input into the first and second interferometer arms 414 and 416. The first and second arms 414 and 416 are bounded by respective mirrors 421 and 422 which reflect the incident light back on itself to the beam splitter 415 where the light signal components from the two arms are interferometrically re-combined into an output path 412 which terminates in an output 408. In the first arm 414 there is placed a quarter-wave plate 425 to give a total half-wave retardation as a result of the light transiting this element twice, once in each direction. The first arm 414 also includes a phase shifter 420. In the output path, a linear polariser 418 is provided aligned at +/-45° relative to the quarter-wave plate 425. It will thus be understood that the device of Figure 10 is the Michelson analogue of the Mach-Zehnder configuration of Figure 2. This embodiment has been included to show that the principles of the invention can be implemented in any interferometer configuration.

System Example 1

Figure 11 shows a passive polarisation stabiliser embodying the invention incorporated in a passive optical network. A broadband light source 1300 is connected to a WDM demultiplexer (demux) 1302. The broadband source 1300 has a bandwidth of 40 nm and is spectrum-sliced into 10 WDM channels of bandwidth 2 nm by the demux 1302. Each channel is independently modulated by respective modulators arranged in a modulator bank 1304. A WDM multiplexer (mux) then couples each of the ten channels into a single fibre link 1308. At the end of the fibre link 1308 there is arranged a WDM demultiplexer 1310 which separates the ten channels into separate fibres. Each channel may be directed to different recipients. One channel is illustrated as being supplied to a passive integrated optical splitter 1314 via a polarisation stabilising device 1312 according to any of the above-described embodiments of the invention. The passive polarisation stabiliser 1312 has an optical path difference of 1 cm and functions to stabilise the response of the splitter. Downstream of the splitter 1314 there is illustrated a single user terminal 1316. The polarisation stabilising device 1312 is preferably arranged immediately prior to the splitter 1314 (or other polarisation sensitive device) so that the input to the splitter is fully stabilised and not de-stabilised again by an intermediate connection between the polarisation stabiliser output and the input of the splitter or other polarisation sensitive element.

System Example 2

Figure 12 shows a second system example incorporating a polarisation stabilising device 1402 according to any of the above-described embodiments. The polarisation stabiliser 1402 is positioned to form a front-end for a semiconductor optical amplifier (SOA) 1404 receiving a broadband signal via a broadband channel 1400. The SOA 1404 is shown connected to an integrated optical splitter 1406. The stabiliser 1402 and SOA 1404 may advantageously be packaged as a single component.

System Example 3

Figure 13 shows a further system example of the use of a passive polarisation stabilising device according to any of the embodiments of the invention. A broadband channel 1500 leads to a passive polarisation stabilising device 1502 arranged immediately prior to an electro-optical switch 1504, which is a still further example of a device which is sensitive to the polarisation of its input signal. The electro-optical switch may be based on electro-optic crystals or liquid crystals. One of the switched output channels of the electro-optical switch 1504 is shown connected to an integrated optical splitter 1506. The stabiliser 1502 and electro-optical switch 1504 may advantageously be packaged as a single component.

It will thus be understood that a passive polarisation device according to embodiments of the invention may find general use in a variety of applications.

**REFERENCES**

1. JP-A-8248358

2. H G Jerrard: "Modern description of polarized light: matrix methods", Optics and Laser Technology, December 1982, pages 309-319

**Claims**

**1.**   A polarisation stabilising device comprising:

an input light path for receiving a light signal having an arbitrary polarisation state;
a divider arranged in the input light path to split the light signal into first and second components;
a first interferometric arm arranged to receive from the divider the first component of the light signal;
a second interferometric arm arranged to receive from the divider the second component of the light signal; and
an output path for outputting the light signal from the first and second interferometric arms;

**characterised by**:

at least one polariser arranged either in the first and second interferometric arms, or in the output path, to define an output polarisation state for the light signal; and
at least one retarder arranged in at least one of the first and second interferometric arms to generate first and second polarisation states in the first and second interferometric arms, respectively, that are orthogonal to each other for at least one polarisation state of the input light signal so that the first polarisation state is transmitted by the at least one polariser and the second polarisation state is absorbed by the at least one polariser, thereby to output the light signal in the output polarisation state defined by the at least one polariser.

**2.**   A device according to claim 1, further comprising a phase shifter arranged in one of the first and second interferometric arms to ensure that there is an optical path difference between the first and second interferometric arms that is higher than a coherence length specified for the light signal.

**3.**   A device according to claim 1 or 2, further comprising a combiner arranged to combine the first and second components of the light signal into the output path.

**4.**   A device according to any one of claims 1 to 3, wherein the at least one polariser comprises a polarising element placed in the output path.

**5.**   A device according to any one of claims 1 to 3, wherein the at least one polariser comprises a polarising element placed in the first and second interferometric arms.

**6.**   A device according to any one of claims 1 to 3, wherein the at least one polariser comprises a first polarising element placed in the first interferometric arm and a second polarising element placed in the second interferometric arms.

7. A device according to any one of claims 1 to 6, wherein the at least one retarder comprises a retarding element arranged in the first interferometric arm.

8. A device according to any one of claims 1 to 6, wherein the at least one retarder comprises a first retarding element arranged in the first interferometric arm and a second retarding element arranged in the second interferometric arm.

9. An optical component comprising:

an optical device having an input for receiving an input light signal, the optical device being sensitive to the polarisation state of its input signal; and
a polarisation stabilising device according to any one of claims 1 to 8 arranged to stabilise the polarisation state of the input signal prior to supply to the input of the optical device.

10. An optical component according to claim 9, wherein the optical device is a semiconductor optical amplifier (SOA).

11. An optical component according to claim 9, wherein the optical device is an electro-optic switch.

12. An optical component according to claim 9, wherein the optical device is an optical splitter.

13. An optical network comprising at least one polarisation stabilising device according to any one of claims 1 to 8.

14. A method of polarisation stabilisation, comprising:

inputting a light signal into an interferometer arrangement comprising first and second arms having an optical path difference therebetween greater than the coherence length of the light signal;
applying a retardation to the light signal in at least one of the arms so that subsequent to the retardation the light signal has orthogonal polarisation states in the first and second arms for at least one polarisation state of the input light signal; and
applying a polarisation with a polariser so that one of the orthogonal polarisation states is absorbed while the other is transmitted.

15. A method according to claim 14, wherein the polarisation is applied in the first and second arms.

16. A method according to claim 14, wherein the polarisation is applied subsequent to recombination of the light signal after the first and second arms.

17. A method according to claim 14, 15 or 16, further comprising recombining the light signal after the first and second arms in a manner that is insensitive to the polarisation state of the light signal input to the interferometer arrangement.

## Fig. 1

λ/2 — 125

114

124

LP

I/P
O/P

106
110
122
116
118
112
108

## Fig. 2

114
λ/2 — 125
δ — 120
LP

I/P
O/P

106
110
122
116
105
118
124
112
108

## Fig. 10

414 — 421

425
λ/4

420
δ

I/P
415
416

406
410
412
422

418
LP

O/P

408

## Fig. 3

$\rho_{in}$(dBm) vs $\lambda$(nm)

## Fig. 4

$\rho_{out}$(dBm) vs $\lambda$(nm)

## Fig. 5

## Fig. 6

## Fig. 7

## Fig. 8

## Fig. 9A

λ/2 (0°)

CP
LP ± 45°

## Fig. 9B

λ/2 (45°)

CP
LP 0°, 90°

## Fig. 9C

R (90°)

LP

## Fig. 11

1302    1304    1306

1300    1    1308

10

1316    1314    1312    1310

## Fig. 12

1400    1402    1404    1406

## Fig. 13

1506

1500    1502    1504

**European Patent Office**

**EUROPEAN SEARCH REPORT**

Application Number

EP 01 30 5142

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 394 605 A (CSELT CENTRO STUDI LAB TELECOM) 31 October 1990 (1990-10-31) * page 1, line 19 - line 24 * * column 3, line 13 - line 23 * * figure 1 * | 1-3,7 | H04B10/135 G02B27/28 |
| A | | 14,15 | |
| A | GB 2 174 505 A (STANDARD TELEPHONES CABLES LTD) 5 November 1986 (1986-11-05) * page 1, right-hand column, line 117 - line 126 * * page 2, left-hand column, line 24 - line 29 * * page 2, left-hand column, line 35 - line 39 * * figure 1 * | 1-3,5-7, 14,15 | |
| A | SHINTAKU T ET AL: "POLARISATION-INDEPENDENT OPTICAL ISOLATOR BASED ON ANTI-SYMMETRIC FIELD CONVERSION" ELECTRONICS LETTERS,GB,IEE STEVENAGE, vol. 33, no. 20, 25 September 1997 (1997-09-25), pages 1723-1724, XP000752286 ISSN: 0013-5194 * figure 1 * | 1,14 | TECHNICAL FIELDS SEARCHED (Int.Cl.7) H04B G02B |

The present search report has been drawn up for all claims

| Place of search | Date of completion of the search | Examiner |
|---|---|---|
| THE HAGUE | 8 October 2001 | Cochet, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EP 1 168 679 A1

**ANNEX TO THE EUROPEAN SEARCH REPORT
ON EUROPEAN PATENT APPLICATION NO.**                  EP 01 30 5142

This annex lists the patent family members relating to the patent documents cited in the above-mentioned European search report.
The members are as contained in the European Patent Office EDP file on
The European Patent Office is in no way liable for these particulars which are merely given for the purpose of information.

08-10-2001

| Patent document cited in search report | | Publication date | Patent family member(s) | | Publication date |
|---|---|---|---|---|---|
| EP 0394605 | A | 31-10-1990 | IT | 1232056 B | 23-01-1992 |
| | | | CA | 2007773 A1 | 28-09-1990 |
| | | | DE | 394605 T1 | 27-02-1992 |
| | | | EP | 0394605 A2 | 31-10-1990 |
| | | | JP | 2275411 A | 09-11-1990 |
| | | | US | 5069520 A | 03-12-1991 |
| GB 2174505 | A | 05-11-1986 | NONE | | |